# EUROPEAN PATENT APPLICATION

(11) **EP 4 699 690 A1**
(43) Date of publication of application: **25.02.2026**
(21) Application number: 24382922.3
(22) Date of filing: 21.08.2024
(51) Int. Cl.: B01J 19/00

(54) **MICROREACTOR AND COATING METHOD FOR COATING THE REACTOR ELEMENTS**

(71) Applicant: Consejo Superior de Investigaciones Científicas (CSIC), 28006 Madrid (ES)
(72) Inventor: Marbán Calzón, Gregorio, Oviedo (ES); Fernández Pérez, Amparo, Oviedo (ES)
(74) Representative: Pons IP

(57) **Abstract**

The present invention describes a microreactor, and more particularly, an optofluidic threaded microreactor manufactured with low-cost commercial threaded elements and a cost-effective coating method for coating said threaded elements at variable scales. The microreactor comprises a cylindrical reaction body (1) fitted with a first and a second end, an inlet (3) flow element assembled at the first end of the cylindrical reaction body (1), an outlet (4) flow element assembled at the second end of the cylindrical reaction body (1), an externally threaded element (2) that can be a threaded rod or an externally threaded tube (22) inserted into the cylindrical reaction body (1) to form a helical reaction channel between the externally threaded element (2) and the cylindrical reaction body (1).

## Description

### OBJECT OF THE INVENTION

The present invention relates to a microreactor, and more particularly, to an optofluidic threaded microreactor manufactured with low-cost commercial threaded elements and a cost-effective coating method for coating said threaded elements at variable scales.

The microreactor of the invention aims to offer a helical microchannel with a controllable and very low radius of curvature coated with catalytic particles. Another object of the invention is to provide a method which enables to use immobilized catalysts in the form of layers.

### BACKGROUND OF THE INVENTION

Microreactors are miniature devices designed to perform chemical reactions in a highly controlled and efficient manner. Typically featuring channels and reaction chambers with dimensions ranging from micrometers to millimeters, microreactors offer several advantages over traditional large-scale reactors. These include enhanced heat and mass transfer, improved contact between phases, and the ability to precisely control reaction conditions, leading to higher yields and selectivity. Additionally, their small size allows for rapid prototyping and testing of new reactions, making them ideal for applications in energy production, environmental remediation, pharmaceuticals, fine chemicals, and material synthesis.

When a reaction must be activated catalytically with a solid catalyst, the catalyst is introduced into the microreactor, usually as a bed of particles or immobilized on the inner walls of the microreactor. Additionally, some catalytic reactions are accelerated by a light source, such as ultraviolet, solar, etc. There are photocatalytic microreactors (also called optofluidic microreactors) which have been specifically developed to get profit of both the light and the solid catalysts, mainly for environmental and energy applications, such as air purification, water treatment or hydrogen production.

The most common microreactors are chip-type or channelled microreactors, which consist of a flat substrate, fabricated with a variety of materials (stainless steel, glass, polydimethylsiloxane, etc.). Their channels or slots are formed with a depth of less than a millimetre, using techniques such as (photo)lithography, injection moulding, embossing, laser micromachining or micro perforation, etc., and they are quite expensive techniques. For photocatalytic reactions the channelled chips can be covered with transparent foils made of transparent polymers, quartz, glass, etc., which are externally illuminated.

Compared to channelled photocatalytic microreactors, a more economical approach is to use capillary microreactors in which the reactor consists of a standard transparent tube with a small internal diameter. Capillary microreactors can use straight capillaries, although curved configurations such as helical coils are more common, as helical capillary microreactors enjoy a more compact design while exhibiting a narrower residence time distribution and better micromixing performance than straight ones, due to the formation of secondary flow patterns, i.e., Dean vortices (turbulent mixing zones). Although helical capillary microreactors have a high potential, they present a limitation because the curvature radius is limited. Since small radii produce material deformation, inhomogeneity in the cross section, unwanted obstructions and high pressure drop, and the pitch distance is limited by the thickness of the capillary wall, it is difficult to achieve long capillary lengths (for slow rate reactions) with low radii of curvature in small reactor volumes.

The microreactors incorporating catalysts may have issues like the immobilization of the catalyst on the wall surface which is a very attractive practice to avoid the drawbacks associated with the use of suspended particles. In photocatalytic processes the use of supported catalysts avoids the problem of light shielding and low photon transfer efficiency. Techniques specific to both chip-type microreactors like dip coating, spray coating, etc., and the ones for the capillary microreactors like dynamic gas displacement, etc., are common ones.

Therefore, there is need in the prior art for threaded microreactors and a coating method for coating said threaded elements to overcome the drawbacks of the known microreactors and coating techniques.

### DESCRIPTION OF THE INVENTION

In accordance with a first aspect of the present invention there is provided a microreactor which comprises a cylindrical reaction body fitted with a first and a second end, an externally threaded element inserted into the cylindrical reaction body to form a helical reaction channel between the externally threaded rod and the cylindrical reaction body, an inlet flow element mounted at the first end of the cylindrical reaction body and an outlet flow element mounted at the second end of the cylindrical reaction body.

For connecting the inlet and the outlet to the cylindrical reaction body directly, some push-in fittings, connectors, silicone tube joints and handmade fittings can be used between the inlet and the cylindrical reaction body, and between the outlet and the cylindrical reaction body to provide a leak-free connection. The inlet can be a regular inlet with one single opening or can be a Y or T connector with a low swept volume, for the introduction of fluid mixtures.

The outer diameter of the threaded element is slightly larger than the inner diameter of the cylindrical reaction body for the helical reaction channel to be formed effectively and for avoiding unwanted side paths. The cylindrical reaction body of the microreactor can be a flexible or semi-rigid transparent tube to be illuminated externally. Flexible or semi-rigid tubes can be made of transparent polymer-based materials for example, polytetrafluoroethylene (PTFE), fluorinated ethylene propylene (FEP) and the like. The externally threaded element is inserted into the cylindrical reaction body to form a long helical reaction channel, without causing damages by applying a constant pressure using a press device or by screwing the externally threaded element or by shrink fitting. In case of applying shrink fitting, the cylindrical reaction body is a heat shrinkable tube. For non-photocatalytic reactions the threaded element can be confined in a metal tube cylindrical reaction body by shrink fit.

The microreactor further comprises an illuminating element placed outside the cylindrical reaction body to perform photocatalytic reactions in the helical reaction channel. The illuminating element can be a group of adhesive UV-led strips placed on heat dissipation aluminium plates or another light source. For reactions driven by sunlight, the illuminating element can be avoided by placing the microreactor outdoors.

The microreactor of the invention has a helical reaction channel where a reagent circulates, said channel is formed by the externally threaded element which is a commercial and low-cost threaded rod commonly found in hardware stores. Due to the variety of metrics of these rods, the microreactor is manufactured by using one these screws and a controllable and very low radius of curvature is provided for the reaction channel. Additionally, using a commercial smooth rod to fabricate the externally threaded rod ensures an economical manufacturing process since it permits using simple devices like dies, taps, or lathes.

The microreactor and its helical reaction channel can be made quite small, as the nominal diameters of commercial threaded elements (metric threaded rods, dies and taps) can be as small as 1 mm, with pitch distances as low as 250 µm, equivalent to a hydraulic diameter of 135 µm. These small rod diameters allow the radius of curvature of the helical reaction channel to be reduced to values that are impossible to achieve with capillary microreactors.

Most of the parameters like dimensions of the commercial threaded rods and dies are obtained from the manufacturers, including the fundamental deviations and tolerances for different nominal diameters and pitch distances in order to calculate the length of the helical microchannel and the exact diameter of the externally threaded rod. Some of these parameters are shown in the Table 1.

**Table 1. Dimensions of typical commercial threaded rods and dies. (D: Nominal diameter, 2πp: pitch distance, c: thread crest length, v: thread root length, f: thread flank length, h: thread height)**

| D (mm) | 2πp (mm) | c (mm) | v (mm) | p (mm/rad) | f (mm) | h (mm) |
|---|---|---|---|---|---|---|
| 1.0 | 0.25 | 0.021 | 0.057 | 0.040 | 0.086 | 0.148 |
| 1.1 | 0.25 | 0.021 | 0.057 | 0.040 | 0.086 | 0.148 |
| 1.2 | 0.25 | 0.021 | 0.057 | 0.040 | 0.086 | 0.148 |
| 1.4 | 0.30 | 0.026 | 0.069 | 0.048 | 0.103 | 0.178 |
| 1.6 | 0.35 | 0.030 | 0.080 | 0.056 | 0.120 | 0.208 |
| 1.7 | 0.35 | 0.030 | 0.080 | 0.056 | 0.120 | 0.208 |
| 1.8 | 0.35 | 0.030 | 0.080 | 0.056 | 0.120 | 0.208 |
| 2.0 | 0.25 | 0.021 | 0.057 | 0.040 | 0.086 | 0.148 |
| 2.0 | 0.40 | 0.034 | 0.091 | 0.064 | 0.137 | 0.238 |
| 2.2 | 0.25 | 0.021 | 0.057 | 0.040 | 0.086 | 0.148 |
| 2.2 | 0.45 | 0.039 | 0.103 | 0.072 | 0.154 | 0.267 |
| 2.3 | 0.40 | 0.034 | 0.091 | 0.064 | 0.137 | 0.238 |
| 2.5 | 0.35 | 0.030 | 0.080 | 0.056 | 0.120 | 0.208 |
| 2.5 | 0.45 | 0.039 | 0.103 | 0.072 | 0.154 | 0.267 |
| 2.6 | 0.45 | 0.039 | 0.103 | 0.072 | 0.154 | 0.267 |
| 3.0 | 0.35 | 0.030 | 0.080 | 0.056 | 0.120 | 0.208 |
| 3.0 | 0.50 | 0.043 | 0.114 | 0.080 | 0.171 | 0.297 |
| 3.5 | 0.35 | 0.030 | 0.080 | 0.056 | 0.120 | 0.208 |
| 3.5 | 0.60 | 0.051 | 0.137 | 0.095 | 0.206 | 0.356 |
| 4.0 | 0.35 | 0.030 | 0.080 | 0.056 | 0.120 | 0.208 |
| 4.0 | 0.50 | 0.043 | 0.114 | 0.080 | 0.171 | 0.297 |
| 4.0 | 0.70 | 0.060 | 0.160 | 0.111 | 0.240 | 0.416 |
| 4.5 | 0.75 | 0.064 | 0.171 | 0.119 | 0.257 | 0.445 |
| 5.0 | 0.50 | 0.043 | 0.114 | 0.080 | 0.171 | 0.297 |
| 5.0 | 0.80 | 0.069 | 0.183 | 0.127 | 0.274 | 0.475 |
| 6.0 | 0.50 | 0.043 | 0.114 | 0.080 | 0.171 | 0.297 |
| 6.0 | 0.75 | 0.064 | 0.171 | 0.119 | 0.257 | 0.445 |
| 6.0 | 1.00 | 0.086 | 0.229 | 0.159 | 0.343 | 0.594 |
| 7.0 | 0.50 | 0.043 | 0.114 | 0.080 | 0.171 | 0.297 |
| 7.0 | 0.75 | 0.064 | 0.171 | 0.119 | 0.257 | 0.445 |
| 7.0 | 1.00 | 0.086 | 0.229 | 0.159 | 0.343 | 0.594 |
| 8.0 | 0.50 | 0.043 | 0.114 | 0.080 | 0.171 | 0.297 |
| 8.0 | 0.75 | 0.064 | 0.171 | 0.119 | 0.257 | 0.445 |
| 8.0 | 1.00 | 0.086 | 0.229 | 0.159 | 0.343 | 0.594 |
| 8.0 | 1.25 | 0.107 | 0.286 | 0.199 | 0.429 | 0.742 |
| 9.0 | 0.75 | 0.064 | 0.171 | 0.119 | 0.257 | 0.445 |
| 9.0 | 1.00 | 0.086 | 0.229 | 0.159 | 0.343 | 0.594 |
| 9.0 | 1.25 | 0.107 | 0.286 | 0.199 | 0.429 | 0.742 |

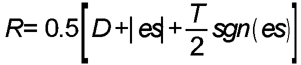

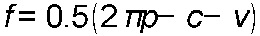

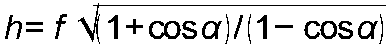

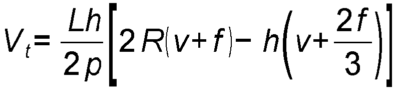

R: threaded element radius (mm), es: thread fundamental deviation (mm), T: thread tolerance (mm), α: thread angle, L: threaded element length, Vt: void volume of element thread (mm³).

The void volume refers to the volume of the helical reaction channel of the microreactor.

The threads of commercial threaded rods can be in various forms like single-start thread and multi-start thread. The multi-start thread rods have more than one independent "thread groove" machined adjacent to each other. Multi-start thread rods comprise two or more intertwined threads, whereas single start thread rods only comprise one thread. The externally threaded element of the microreactor can be a single-start thread or multi-start thread type threaded rod. A multi-start thread rod consists of a rod or screw with two or more intertwined threads running parallel to one another. Rods with multi-start thread with pitch distances and nominal diameters in the same range as those of the single start thread are commercially available.

The heat of an exothermic reaction or the heat of the thermal fluid can be transferred to favour parallel endothermic reactions when a multi-start thread rod is used as an externally threaded element. Using a multi-start thread screw as an externally threaded rod provides parallel reaction channels in the microreactor and co-current or counter-current reactions can be performed in said parallel reaction channels for a greater use of released heat, specific channels for cooling or heating, etc.

The temperature of the reaction can be also controlled by replacing the externally threaded rod by an externally threaded tube that allows the circulation of a thermal fluid (which can be for cooling or heating) through it. Therefore, depending on the reaction that is wanted to perform, where temperature of the reaction has either positive or negative effect, cooling or heating fluids can be employed in the microreactor for temperature control of the catalytic or photocatalytic processes.

In accordance with a second aspect of the present invention there is provided a coating method for a threaded element that can be a threaded rod or an externally threaded tube, of the microreactor, said method comprises the steps of:
- preparing a coating dispersion comprising a catalytic material,
- attaching the externally threaded element on a stirrer device,
- fitting a vessel with an inferior end and a superior end to the lower end of the externally threaded element, wherein the inferior end of the vessel has an internally threaded hole screwable to the external diameter of the externally threaded element,
- filling the vessel with said coating dispersion,
- running the stirrer device at a constant speed to rotate the externally threaded element,
- manually holding the vessel on its way along the externally threaded element or automatically holding the vessel on its way along the externally threaded element using a mechanical or robotic arm to homogeneously impregnate the externally threaded element with the coating dispersion.

Later the impregnated externally threaded element can be removed from the stirrer device.

The internally threaded hole of the vessel has an inside diameter attachable or screwable to the outside diameter of the externally threaded element.

The coating dispersion has a viscosity that prevents it from leaking through the small gap that remains between the external surface of the externally threaded element and the internal surface of the internally threaded hole of the vessel during the step of filling said vessel.

The vessel is provided with an internally threaded hole to securely attach the vessel to the lower end of the externally threaded element while the opposite end of said element is attached to the stirrer device. The stirrer device can be a mechanical rod stirrer and works as a mechanical agitator.

Preferably a standard acrylic primer, or any type of primer material that permits the coating dispersion to have the appropriate viscosity in accordance with the coating method of the invention, in which the catalytic particles are dispersed can be used for coating. After filling the vessel with the coating dispersion, the stirrer device can be turned on at a constant low speed. While the externally threaded element is rotated axially in a vertical position, the vessel rises along the externally threaded element, a thin homogeneous film of dispersion forms on the outer surface of the externally threaded element and leaving the ridges intact. In case of manually holding the vessel as it rises along the externally threaded element, the user prevents the vessel from rotating by simply holding the vessel. If the vessel is automatically held by a mechanical or robotic arm (instead of a person holding it), said arm can be adjusted or secured to the vessel to prevent the vessel from rotating as it ascends along the externally threaded element. The speed of the stirrer device can be optimized during the coating process.

In case of performing the coating process by using the mechanical or robotic arm, optionally, some guiding elements assembled on the stirrer device parallel to the externally threaded element can be used to ensure the smooth rise of said arm attached to the vessel and to prevent the vessel from seizing during its rise along the externally threaded element.

The coated externally threaded element can be cured at an appropriate condition of time and temperature according to the characteristics given for the selected primer material for coating dispersion. The method allows homogeneous and reproducible films to be obtained in a simple and fast way for catalytic particles and ensures a high adhesion of these particles to the externally threaded element surface.

Coating the threaded element of the microreactor with a catalyst material before inserting said element into the microreactor ensures to immobilize a catalyst on the threaded inner wall surface of the microreactor. In situ pretreatment of the coated threaded element can be carried out within the microreactor to remove a labile organic matter from the primer prior to reaction. The preferred pretreatment of the catalyst layer is to pass a continuous stream of water through the microchannel under illumination with the illuminating element at the reaction temperature until the total organic content of the leaving water is zero.

The use of immobilized catalysts in the form of layers eliminates the problems associated with beds of loose particles, such as light shielding and low photon transfer efficiency.

The microreactor of the present invention combines and enhances the advantages of microcapillary reactors with the benefits of channelled microreactors. Besides the known advantages of chip-type microreactors in terms of heat and mass transfer, modularity, miniaturization, etc., the microreactor of the present invention specifically employs low-cost commercial elements that allow for a great versatility in the dimensions and design and permit an optimal use of the reactor space. It also solves the problems associated with the use of helical capillary microreactors, such as the impossibility of reducing the radius of curvature to dimensions below one millimeter, and the large amount of dead space due to the walls of the capillary tubes.

The coating method of the invention is based on a controlled rotation system and allows obtaining homogeneous and reproducible films in a simple and fast way and it is a suitable method for coating standard threaded elements like screws or externally threaded tubes at variable scales.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1 - Shows a view of the microreactor with a transparent cylindrical reaction body (left) and a view of the microreactor covered with an illuminating element (right).
Figure 2 - Shows the method of the invention.
Figure 3 - Shows a top view (left) and a perspective view (right) of the vessel.
Figure 4 - Shows different types of screws, from left to right single-start thread, double-start thread, and three-start thread screws.
Figure 5 - Shows an example of the experimental setup for the photodegradation of aqueous ibuprofen with the microreactor of the present invention.
Figure 6 - Shows a scanning electron microscopy (SEM) image (A) of the externally threaded element uncoated and a section (A1) of said SEM image (A), another SEM image (B) of the externally threaded element coated with the method of the invention, a section (B1) of said SEM image (B) and an image (B2) of a longitudinal section of the same threaded element shown in image (B) after being subjected to successive polishing stages, and different sections of image (B2) with thickness values of the coated layer in different positions.
Figure 7A - Shows a view of the main sections of another embodiment of the microreactor of the present invention as separate pieces.
Figure 7B - Shows a view of the microreactor of the figure 7A.

### PREFERRED EMBODIMENT OF THE INVENTION

According to one embodiment of the invention a microreactor comprises a cylindrical reaction body (1) fitted with a first and a second end, an inlet (3) flow element mounted at the first end of the cylindrical reaction body (1), an outlet (4) flow element mounted at the second end of the cylindrical reaction body (1), an externally threaded element (2) inserted into the cylindrical reaction body (1) to form a helical reaction channel between the externally threaded element (2) and the cylindrical reaction body (1).

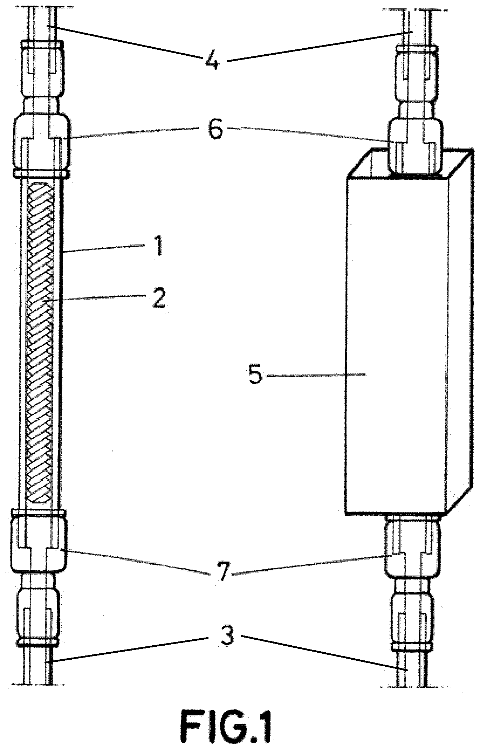

In figure 1 the microreactor is shown with a transparent cylindrical reaction body (1) in the left side. The cylindrical reaction body (1) is a flexible or semi-rigid tube. The externally threaded element (2) is in contact with the internal surface of the cylindrical reaction body (1). The externally threaded element (2) is coated with a catalytic material and the catalytic material is a photocatalytic material. For connecting the inlet (3) and the outlet (4) to the cylindrical reaction body (1) directly, a first push-in fitting (6) is used between the outlet (4) and the cylindrical reaction body (1), and a second push-in fitting (7) is used between the inlet (3) and the cylindrical reaction body (1). The microreactor further comprises an illuminating element (5) covering the outside of the cylindrical reaction body (1) as it is shown in the figure 1, on the right side. Photocatalytic reactions are performed in the microreactor.

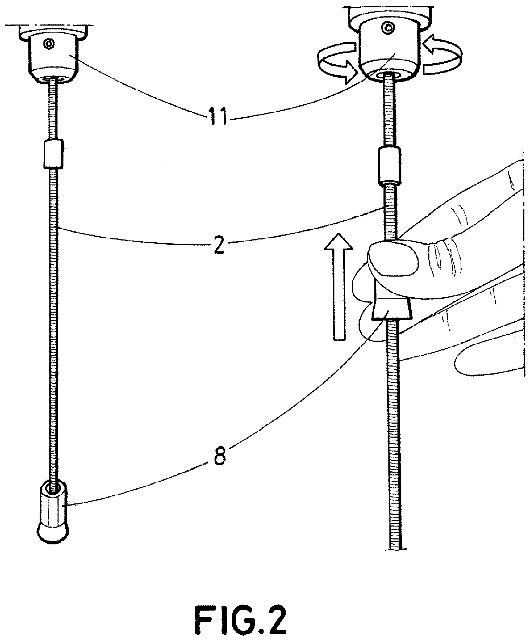

According to another embodiment of the invention a coating method for the threaded element (2) of the microreactor comprises the steps of preparing a coating dispersion comprising a catalytic material, attaching the externally threaded element (2) on a stirrer device (11), fitting a vessel (8) on the lower end of the externally threaded element (2) as it is shown in the figure 2 on the left side. The vessel (8) with openings at both superior end and inferior end, in which the inferior end has an internally threaded hole (10) with a diameter (9) attachable to the external diameter of the externally threaded element (2) so, the vessel (8) is screwed to the externally threaded element (2).

Subsequently, the vessel (8) is filled with said coating dispersion, which has a viscosity that prevents it from leaking through a threaded opening that remains between the thread of the threaded element (2) and the thread of the internally threaded hole (10) before the stirrer device (11) is turned on at a constant speed to rotate the externally threaded element (2). The vessel (8) is hold manually to prevent the vessel (8) from rotating as it ascends along the externally threaded element (2) as it is shown in the figure 2 on the right side. Or said rotation of the vessel (8) is prevented automatically by using a mechanical or robotic arm to homogeneously impregnate the externally threaded element (2) with the coating dispersion. It is observed that in the figure 2, the part of the externally threaded element (2) under the vessel (8) is coated with the catalytic material. The upward movement of the vessel (8) is continued until the entire externally threaded element (2) is coated.

According to an aspect of the invention the coating dispersion comprises a primer material and a photocatalytic material.

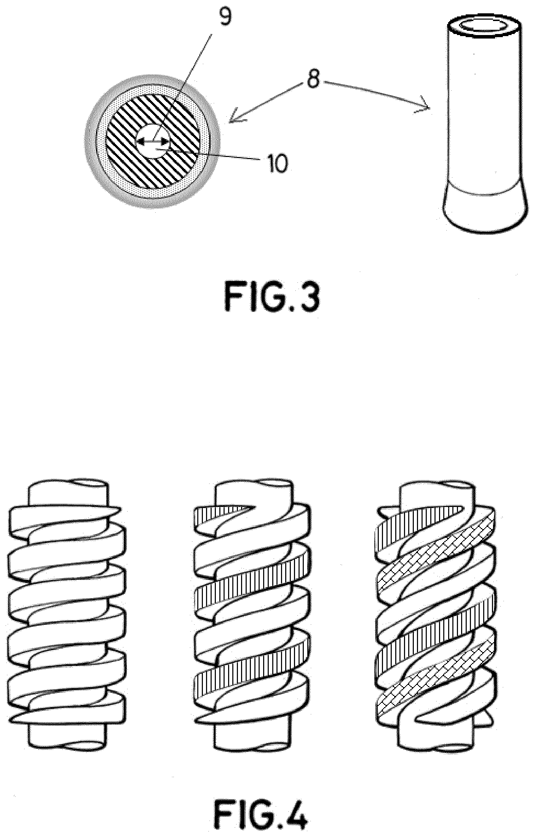

In the figure 3 a top view (left) of the vessel (8) showing the internally threaded hole (10) with its diameter (9) is observed on the left side and, at the right side a perspective view of the vessel (8) is shown.

In the figure 4 it is observed three different types of screws which are used as externally threaded element (2) of the microreactor. The first one is a single-start thread screw, the second one is a double-start thread screw, the third one is a three-start thread screw. The use of multi-start thread screws as the externally threaded element (2) in the present invention requires changes to the inlet (3) and the outlet (4) elements, connectors like the first push-in fitting (6) and the second push-in fitting (7) and the cylindrical reaction body (1) of the microreactor in order to allow different fluid streams to be introduced separately through the different helical microchannels formed by the insertion of the externally threaded element (2) in the cylindrical reaction body (1).

### EXAMPLES

### Example 1

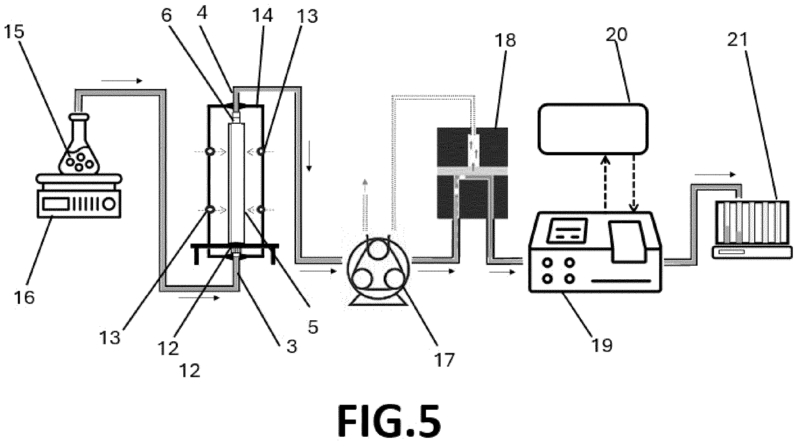

A first example of the present invention provides a microfluidic reactor constructed in accordance with the present invention. According to the example 1, in figure 5 an example of the experimental setup for the photodegradation of aqueous ibuprofen is represented. The microreactor has a cylindrical reaction body (1) (transparent) fabricated with transparent fluorinated ethylene propylene (FEP) tube (6.35x0.80 mm). The externally threaded element (2) is a 316 stainless steel rod M5-6g-0.8 (L = 50 mm, R = 2.484 mm, α = π/3 rad, 2πp = 0.8 mm, c = 0.069 mm, v = 0.183 mm) coated in accordance with the method of the present invention. The selected coating dispersion for the method comprises 50 weight percent of "Preparación Universal Acrylic" from Bruguer and 50 weight percent of Aerodisp^{®} W740X from Evonik Industries (commercial source of TiO₂ nanoparticles with high photocatalytic activity) and cured at room temperature for 48 hours.

The externally threaded element (2) is in contact with the internal surface of the cylindrical reaction body (1). For connecting the inlet (3) and the outlet (4) to the cylindrical reaction body (1) directly, a first push-in fitting (6), which is metallic, is used between the outlet (4) and the cylindrical reaction body (1), and a metal male connector (12), which is of stainless steel, in which the metal ferrules have been replaced with Viton^{™} O-rings for manual assembly, is used between the inlet (3) and the cylindrical reaction body (1). The microreactor further comprises an illuminating element (5) covering the outside of the cylindrical reaction body (1) as it is shown in the figure 5. The illuminating element (5) comprises adhesive UV-led strips (provided by Orizzonte LED lighting) placed on heat dissipation aluminium plates. The light source is composed of four LED strips (10 cm each) placed axially around the cylindrical reaction body (1). The UV radiation from the LEDs is almost monochromatic, centred at around λₘₐₓ = 365 nm (UVA, radiant power = 300 mW/m for ~22 cm of total LED strip length).

### Example 2

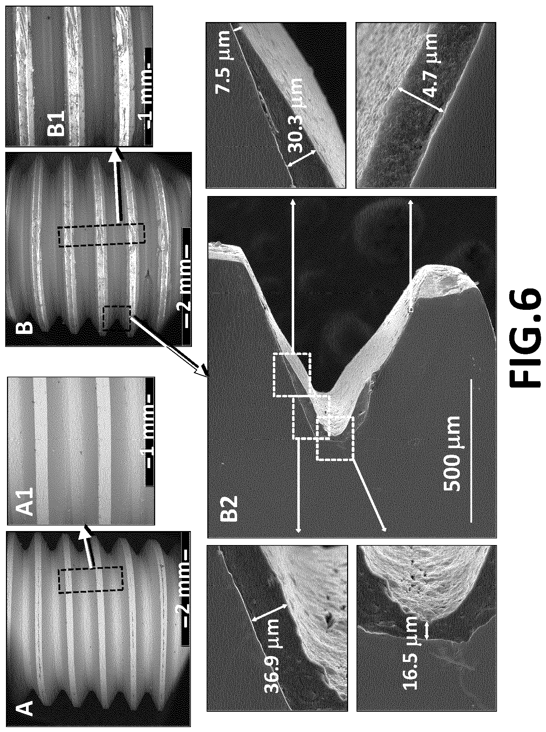

A second example of the invention provides scanning electron microscopy (SEM) images of the externally threaded element (2) used in the example 1, before and after having been coated with the coating dispersion used in the example 1 in accordance with the method of the presence invention. Figure 6 shows a SEM image (A) of the threaded element (2) before coating and another SEM image (B) of the threaded element (2) after coating with the coating method of the present invention. These are backscattered electron images in which the clean steel material of the threaded element (2) appears as a light white material, as shown in section A1 of the uncoated externally threaded element (2), and a coated film which covers the externally threaded element (2) as a grey phase. The flanks and roots of the threads of the threaded element (2) are homogenously coated, while the crests are kept practically clean (as shown in Figure 6, B1 image). A longitudinal section of the same threaded element (2) was obtained after successive polishing stages (image B2).

Representative secondary electron images from a section which comprises the flanks and roots are shown in figure 6, in B2 section where the coated layer shows a decreasing thickness from the root to the crest and the layer can no longer be seen. The coated layer thickness decreases along the flank ranges from ~37 µm to less than 4 µm. The SEM images of figure 6, section B2 shows a morphological difference between the upper and the lower flank. This difference is maintained throughout the entire length of the threaded element (2) and is due to the manufacturing process of the threaded element (2), being like the fingerprint of the material. The TiO₂ yield on the coated film was calculated after confirming that the composition of the film was the same as that of the coating dispersion. This confirmation was achieved by evaluating, through thermogravimetric analysis, the relative amount of solid residue left by two drops of the coating dispersion taken from the vessel (8), one before the coating process and the other after the coating process (which consumes about 20-30% of the coating dispersion), quantities that turned out to be almost equal.

### Example 3

A third example of the present invention provides a comparison of the geometric properties of the microfluidic reactor constructed in accordance with the present invention as described in the first example and other standard microfluidic reactors such as a chip-type microfluidic reactor or a capillary microfluidic reactor. Specifically, the thread of the standard 5 cm long and 5 mm nominal diameter 316 stainless steel rod M5-6g-0.8 used as the threaded element (2) in the first example, which is commercially available at a low cost, inserted in the cylindrical reaction body (1) clearly resembles the chip-type microreactor channels produced with much more expensive techniques. For said threaded element (2) (L = 50 mm, R = 2.484 mm, α = π/3 rad, 2πp = 0.8 mm, c = 0.069 mm, v = 0.183 mm) the total length of the helical channel is 901 mm. Without taking into account inlets, outlets and other joints, a single chip-type microreactor plate of the same length (L=50 mm) should include at least 18 parallel and straight channels of the same section as the thread to reach the length of the helical microchannel of the microreactor of the example 1 (901 mm). If parallel and straight channels of the plate are separated by a distance of only 70 µm (thread crest dimension), then the equivalent plate would have to have minimum dimensions (width × length) of around 14.5cm × 5cm, compared to 0.5cm × 5cm (diameter × length) of the threaded element (2).

The void fraction of the threaded element (2) used in this example, Vₜ/(πR²L), is 0.20, meaning that 20% of the microreactor volume (excluding the cylindrical reaction body (1)) is available for the reaction, while the void fraction of the equivalent plate, assuming a height of only 550 µm (an excessively small height, considering that the height of the channel is already 475 µm) would be 0.05 (only 5% of the plate volume is available for the reaction). The microfluidic reactors constructed in accordance with the present invention and their helical channels are available to be made much smaller, as the nominal diameters of commercial threaded elements (metric threaded rods, dies and taps) can be as small as 1 mm, with pitch distances as low as 0.25 mm, equivalent to a hydraulic diameter of 0.135 mm. These small rod diameters allow the radius of curvature of the helical channel to be reduced to values that are impossible to achieve with capillary microreactors.

### Example 4

A fourth example of the present invention provided the results of photodegradation tests performed in continuous flow mode with the microreactor of the present invention, described in the example 1, with a 2 ppm aqueous ibuprofen solution (15), using the experimental setup depicted in figure 5. With the aid of a four-channel peristaltic pump (17), the aqueous ibuprofen solution (15) continuously stirred with a magnetic stirrer (16) is introduced through the inlet (3) into the microreactor which is well secured in an upright position by a mechanical support (14) as shown in figure 5.

The temperature during reaction is maintained close to ambient temperature through some air flow inlets (13). The time-dependent concentration of ibuprofen in a reacted stream is evaluated online by a UV-Visible spectrometer (19). The absorbance at 224 nm is used to evaluate the ibuprofen concentration during a reaction. The temperature of the spectrophotometer flow-through cell is kept constant at 20 °C using a thermo-circulating bath (20). A baseline correction is made using deionized water. To avoid the trawling of gas bubbles (generated in the reaction zone) into a UV-Visible cuvette of the UV-Visible spectrophotometer (19), a bubble trap (18) is incorporated in the spectrophotometer feed line which uses the pressure differential between two sides of a hydrophobic PTFE membrane to remove bubbles before entering the UV-Visible spectrophotometer (19). Samples of a liquid stream exiting from the microreactor are collected in various test tubes at controlled time intervals by a fraction collector (21). These samples are analysed to determine their total organic content (TOC) and TiO₂ content. TOC contents are exceedingly low and had to be corrected for the TOC of deionized water samples exposed at the lab atmosphere for the time of the reaction. As a previous step for the photodegradation experiments, an in-situ pretreatment of the catalyst was carried out in order to remove the labile organic matter from the primer. This stage consisted of a continuous stream of deionized water passing through the microreactor (~12 mL/h) under UV illumination until the TOC value of the exiting water collected in the liquid sample collector (21) was zero. In the photodegradation experiments, a stream of the aqueous ibuprofen solution (2 ppm) at a flow rate of ~12 mL/h is passed through the microreactor of the present invention. The adsorption/desorption equilibrium is reached in a first step in darkness (60 min) before turning on the light on the illuminating element (5) for the photocatalytic reaction. Photolysis tests of ibuprofen in the absence of catalyst reflected the absence of homogeneous photodegradation. Long-term reaction experiments (more than 20 hours) produced a stable ibuprofen conversion of 73% and a TOC reduction of 65%, with negligible TiO₂ losses. These are exceedingly high conversion values for such a low ibuprofen concentration.

### Example 5

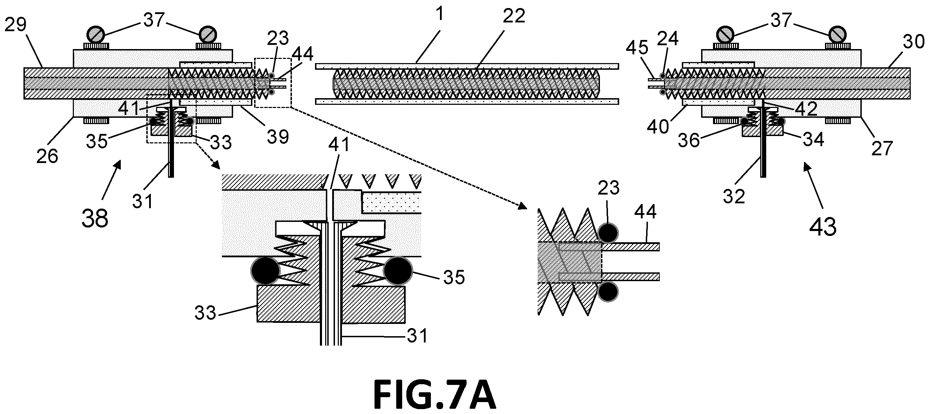

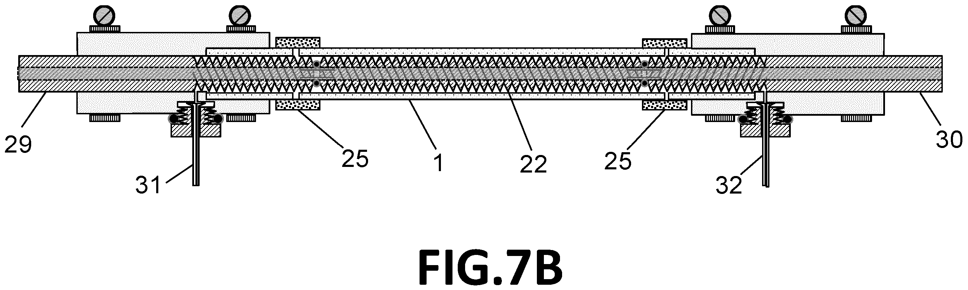

A fifth example provides another embodiment of the microreactor constructed in accordance with the present invention in which the externally threaded element (2) is an externally threaded tube (22) that allows the circulation of a thermal fluid (which can be cooling or heating) through it as shown in figure 7A and figure 7B. According to this example of the invention the microreactor comprises a cylindrical reaction body (1) fitted with a first and a second end, an externally threaded tube (22) inserted into the cylindrical reaction body (1) to form both a helical reaction channel between the externally threaded tube (22) and the cylindrical reaction body (1) and an internal cylindrical channel for circulation of the thermal fluid inside the externally threaded tube (22), an inlet section (38) which includes a reaction fluid inlet (31) and a thermal fluid inlet (29) mounted at the first end of the cylindrical reaction body (1), an outlet section (43) which includes a reaction fluid outlet (32) and a thermal fluid outlet (30) mounted at the second end of the cylindrical reaction body (1). In another configuration the thermal fluid inlet (29) is in the outlet section (43) and the thermal fluid outlet (30) is in the inlet section (38), so the thermal fluid inlet and outlet (29, 30) exchange its function with respect to the direction of a flow of the thermal fluid.

In figure 7B the main sections of the microreactor, the inlet section (38), the externally threaded tube (22) in contact with the cylindrical reaction body (1) and the outlet section (43), are assembled with two silicone tubes (25), one (25) is located between the inlet section (38) and the cylindrical reaction body (1) and the other (25) is located between the outlet section (43) and the cylindrical reaction body (1) to form the microreactor.

The externally threaded tube (22) is manually fabricated with a 5 mm outer diameter 316 stainless steel tube and a M5-6g-0.8 tap (R = 2.484 mm, α = π/3 rad, 2πp = 0.8 mm) while the transparent cylindrical reaction body (1) is fabricated with transparent fluorinated ethylene propylene (FEP) tube (6.35x0.80 mm).

In Figure 7A, the inlet section (38) comprises a thermal fluid inlet (29) which is a modified stainless steel tube, a first end of the thermal fluid inlet (29) is the unchanged part of the stainless steel tube and a second end of the thermal fluid inlet (29) is the part of the stainless steel tube externally threaded with a manual screw tap to allow said second end to have the same inner and outer diameters as the externally threaded tube (22). The inlet section (38) also comprises a cylindrical inlet body (39) to partially cover the threaded section of the thermal fluid inlet (29), a first semi-rigid connector (26) to connect the thermal fluid inlet (29) with the reaction fluid inlet (31), allowing said fluid to circulate through a first orifice (41) and between the threaded section of the thermal fluid inlet (29) and the internal surface of the cylindrical inlet body (39) without loss of reaction liquid thanks to a plurality of clamps (37) that hermetically fit the first semi-rigid connector (26) to the thermal fluid inlet (29) and the cylindrical inlet body (39), a first male microfluidic connector (33) threaded to a female connection in the first semi-rigid connector (26) that allows the reaction fluid inlet (31) to be hermetically adjusted to an inferior opening of the first orifice (41) without possible backflow of the reaction liquid thanks to a first sealing O-ring (35); finally, a first connection O-ring (23) around a first connection tube (44), which is a stainless steel tube in which the external diameter is slightly lower than the internal diameter of the externally threaded tube (22) and identical to the internal diameter of the first connection O-ring (23), is used to assemble the inlet section (38) to the cylindrical reaction body (1) avoiding the mixing of the reaction fluid and the thermal fluid while allowing the passage of said fluids respectively over and through the externally threaded tube (22).

In Figure 7A, the outlet section (43) comprises a thermal fluid outlet (30) which is a modified stainless steel tube, a first end of the thermal fluid outlet (30) is the unchanged part of the stainless steel tube and a second end of the thermal fluid outlet (30) is the part of the stainless steel tube externally threaded with a manual screw tap to allow said second end to have the same inner and outer diameters as the externally threaded tube (22). The outlet section (43) also comprises a cylindrical outlet body (40) to partially cover the threaded section of the thermal fluid outlet (30), a second semi-rigid connector (27) to connect the thermal fluid outlet (30) with the reaction fluid outlet (32), allowing said fluid to circulate through a second orifice (42) and between the threaded section of the thermal fluid outlet (30) and the internal surface of the cylindrical outlet body (40) without loss of reaction liquid thanks to a plurality of clamps (37) that hermetically fit the second semi-rigid connector (27) to the thermal fluid outlet (30) and the cylindrical outlet body (40), a second male microfluidic connector (34) threaded to a female connection in the second semi-rigid connector (27) that allows the reaction fluid outlet (32) to be hermetically adjusted to an inferior opening of the second orifice (42) without possible backflow of the reaction liquid thanks to a second sealing O-ring (36); finally, a second connection O-ring (24) around the second connection tube (45), which is a stainless steel tube in which the external diameter is slightly lower than the internal diameter of the externally threaded tube (22) and identical to the internal diameter of the second connection O-ring (24), is used to assemble the outlet section (43) to the cylindrical reaction body (1) avoiding the mixing of the reaction fluid and the thermal fluid while allowing the passage of said fluids respectively over and through the externally threaded tube (22).

In Figure 7A, the inlet section (38) and the outlet section (43) have different functions in the microreactor although they are morphologically identical and exchangeable.

As shown in figure 7A, the first and second semi-rigid connectors (26, 27) are identical and manufactured with cylindrical pieces of PTFE and simple tools such as a 5 millimeter drill, for the axial channels and the side female connections, and a 0.5 millimeter drill for the first and the second orifices (41, 42). The internal thread of the side female connections was formed by simply threading the first and second male microfluidic connectors (33, 34) into the drilled side holes. The reaction fluid inlet and outlets (31, 32) are flat-ended PTFE tubes identical to those supplied with flow cells in UV-Visible spectrometers. The cylindrical inlet and outlet bodies (39, 40) are fabricated with transparent fluorinated ethylene propylene (FEP) tube (6.35x0.80 mm). A leak-proof, firm and stable assembly of the microreactor of the present invention is achieved by threading the inlet section (38) and outlet section (43) at both ends of the cylindrical reaction body (1) until the inlet and the outlet sections (38, 43) are held tightly, at the same time when the silicone tubes (25) are placed to cover a space between the first and the second ends of the cylindrical reaction body (1) and the ends of the cylindrical inlet and outlet bodies (39, 40).

## Claims

1. A microreactor comprising:
- a cylindrical reaction body (1) fitted with a first and a second end,
- an inlet (3) flow element mounted at the first end of the cylindrical reaction body (1),
- an outlet (4) flow element mounted at the second end of the cylindrical reaction body (1),
- an externally threaded element (2) inserted into the cylindrical reaction body (1) to form a helical reaction channel between the externally threaded element (2) and the cylindrical reaction body (1).

2. The microreactor according to claim 1, wherein the cylindrical reaction body (1) is a flexible or semi-rigid tube.

3. The microreactor according to claim 2, wherein the cylindrical reaction body (1) is a transparent tube.

4. The microreactor according to claim 1, wherein the cylindrical reaction body (1) is a metallic tube.

5. The microreactor according to claim 1, wherein the externally threaded element (2) is coated with a catalytic material.

6. The microreactor according to claim 5, wherein the catalytic material is a photocatalytic material.

7. The microreactor according to claim 3 and 6, further comprising an illuminating element (5) covering the outside of the cylindrical reaction body (1).

8. The microreactor according to claim 1, wherein the externally threaded element (2) is a single-start thread threaded element or a multi-start thread threaded element.

9. The microreactor according to claim 1, wherein the externally threaded element (2) is an externally threaded rod or an externally threaded tube (22).

10. A coating method of the threaded element (2) of the microreactor described in claims from 1 to 9, comprising the steps of:
- preparing a coating dispersion comprising a catalytic material
- attaching the externally threaded element (2) on a stirrer device (11),
- fitting a vessel (8) with an inferior end and a superior end to the lower end of the externally threaded element (2), wherein the inferior end of the vessel (8) has an internally threaded hole (10) screwable to the external diameter of the externally threaded element (2),
- filling the vessel (8) with said coating dispersion,
- running the stirrer device (11) at a constant speed to rotate the externally threaded element (2),
- holding manually the vessel to prevent the vessel (8) from rotating as it ascends along the externally threaded element (2) or automatically holding the vessel (8) to prevent rotation as it ascends along the externally threaded element (2) using a mechanical or robotic arm to homogeneously impregnate the externally threaded element (2) with the coating dispersion.

11. The method, according to claim 10, wherein the step of preparing a coating dispersion further comprises a primer material and a photocatalytic material.

12. The method, according to claim 10, wherein the coating dispersion has a viscosity that prevents a leakage through a gap that remains between the surface of the externally threaded element (2) and the internally threaded hole (10) during the step of filling the vessel (8).
